Europäisches Patentamt

(19) European Patent Office

Office européen des brevets

(11) EP 0 514 229 B1

(12) FASCICULE DE BREVET EUROPEEN

(45) Date de publication et mention
de la délivrance du brevet:
**10.12.1997 Bulletin 1997/50**

(51) Int. Cl.⁶: **B01J 21/04**, C01F 7/02,
B01J 21/12

(21) Numéro de dépôt: **92401008.5**

(22) Date de dépôt: **10.04.1992**

(54) **Procédé de préparation d'alumine stabilisée par de la silice**

Verfahren zur Herstellung eines mit Kieselsäure stabilisiertem Aluminiumoxyd

Process for the preparation of alumina stabilized with silica

(84) Etats contractants désignés:
**AT BE CH DE DK ES FR GB GR IT LI LU NL SE**

(30) Priorité: **14.05.1991 FR 9105841**

(43) Date de publication de la demande:
**19.11.1992 Bulletin 1992/47**

(73) Titulaire: **RHONE-POULENC CHIMIE**
**92408 Courbevoie Cédex (FR)**

(72) Inventeurs:
• **Chopin, Thierry**
**F-93200 Saint Denis (FR)**
• **Dovergne, Georges**
**F-30340 Salindres (FR)**
• **Le Loarer, Jean-Luc**
**F-30340 Salindres (FR)**

(74) Mandataire:
**Dubruc, Philippe et al**
**RHONE-POULENC CHIMIE,**
**Direction de la Propriété Industrielle,**
**25, Quai Paul Doumer**
**92408 Courbevoie Cédex (FR)**

(56) Documents cités:
EP-A- 0 228 270        EP-A- 0 355 231
DE-A- 3 227 676        DE-B- 2 451 849
US-A- 4 061 594        US-A- 4 438 219
US-A- 4 722 920

• **CHEMICAL ABSTRACTS, vol. 95, no. 20, 16**
**Novembre 1981, Columbus, Ohio, US; abstract**
**no. 176314F, K. JIRATOVA: 'Isoelectric point of**
**modified alumina' page 467 ;**
• **CHEMICAL ABSTRACTS, vol. 84, no. 26, 28 Juin**
**1976, Columbus, Ohio, US; abstract no. 185386F,**
**'Thermal Stabilization of an active Alumina and**
**effect of Dopants on the Surface Area' page 345 ;**
• **Journal of Materials Science, 11(1976)465-470**
• **Applied Catalysis, 1(1981)165-167**

Remarques:
Le dossier contient des informations techniques
présentées postérieurement au dépôt de la
demande et ne figurant pas dans le présent
fascicule.

**Description**

La présente invention concerne un nouveau procédé de préparation d'une alumine stabilisée par de la silice conservant une surface spécifique élevée à haute température.

Il est bien connu d'utiliser, notamment pour le traitement des gaz d'échappement des moteurs à combustion interne, des catalyseurs dont le support est à base d'alumine.

Il est également bien connu que l'efficacité d'un catalyseur est généralement d'autant plus grande que la surface de contact entre le catalyseur et les réactifs est grande. Pour ce faire, il est nécessaire que le catalyseur soit maintenu en un état le plus divisé possible, c'est-à-dire que les particules catalytiques solides qui le composent soient aussi petites et individualisées que possible. Le rôle fondamental du support est donc de maintenir les particules de catalyseur ou cristallites au contact des réactifs, à l'état le plus divisé possible.

Compte tenu des conditions sévères auxquelles les catalyseurs de traitement des gaz d'échappement sont soumis, leurs supports, sur lesquels peuvent être déposés des métaux précieux, doivent présenter une excellente stabilité thermique, c'est-à-dire conserver une surface spécifique élevée à haute température, en particulier jusqu'à 1200°C.

L'alumine employée traditionnellement comme support de tels catalyseurs subit une transformation de phase irréversible en $\alpha$-alumine sous l'effet de températures élevées (notamment supérieures ou égales à 1000°C), ce qui a pour conséquence de réduire sa surface spécifique à moins de 10 m$^2$/g et de provoquer le frittage de la phase catalytique ; le catalyseur est alors détérioré et perd ainsi une grande partie de son efficacité.

Il a déjà été proposé d'ajouter à l'alumine divers composés destinés à améliorer ses qualités au vieillissement thermique. Ainsi, il est connu d'imprégner un support de catalyseur à base d'alumine préformée et calcinée avec une solution de nitrate de métal de terre rare (US-A-4061594) ou avec une solution d'un composé du silicium. Néanmoins, les alumines obtenues présentent à haute température une surface spécifique encore insuffisante.

Un procédé de préparation d'une alumine contenant de la silice, l'alumine de départ étant de la boehmite, est également connu. L'alumine stabilisée est formée par un traitement en phase vapeur à des températures supérieures à 500°C (EP-A-228 270).

D'après le document EP-A-355 231, il est également connu de traiter l'alumine par de la silice de manière à stabiliser sa surface spécifique à haute température. Une telle alumine stabilisée est obtenue par mélange d'un hydrogel d'alumine et d'un gel de silice.

La Demanderesse a mis au point un nouveau procédé de préparation d'une alumine stabilisée par de la silice conservant une surface spécifique élevée à haute température, la silice étant répartie dans la structure cristalline de l'alumine, ledit procédé de préparation partant d'une alumine de départ sous forme de poudre issue de la déshydratation rapide d'un hydroxyde ou d'un oxyhydroxyde d'aluminium.

Selon le procédé de l'invention, la silice ne se retrouve pas essentiellement à la surface de l'alumine ; elle est répartie dans la structure cristalline de l'alumine.

Ceci est mis en évidence notamment par la valeur du point isoélectrique de l'alumine stabilisée issue du procédé de l'invention et également par son pouvoir isomérisant des oléfines.

Ce point isoélectrique est défini par le pH d'une suspension de l'alumine issue du procédé selon l'invention dans un électrolyte (par exemple une solution de nitrate de sodium) pour lequel la mobilité électrophorétique d'une particule de cette alumine dans l'électrolyte est nulle, c'est-à-dire pour lequel le potentiel zéta est nul et ce quelle que soit la force ionique du milieu ("Zeta Potential in Colloid Science", Robert J. HUNTER, Academic Press, 1981).

L'alumine stabilisée issue du procédé de l'invention présente un point isoélectrique supérieur à 7, de préférence à 8. Il est très proche de celui de l'alumine non stabilisée, ce qui montre que la silice incorporée n'affecte que très peu les charges de surface.

Le pouvoir isomérisant de l'alumine stabilisée issue du procédé de l'invention est déterminé en réalisant un test d'isomérisation du butène (mélange de butène-1, de cis butène-2 et de trans butène-2) en isobutène.

Pour cela on introduit 500 mg de l'alumine stabilisée issue du procédé de l'invention dans un réacteur. Le produit est conditionné pendant 2 heures à 500°C sous balayage d'hélium sous un débit de 2,5 l/h.

On injecte 1 ml de butène dans le flux d'hélium.

L'analyse des gaz de sortie par chromatographie permet de mesurer la quantité de butène-1, de cis et trans butène-2 et d'isobutène récupérée.

On détermine, par le calcul, la constante d'équilibre thermodynamique K$_{th}$(T) théorique et, par le résultat des mesures, la constante d'équilibre K(T) réelle.

$$K_{th}(T) = \frac{[\text{isobutène}]_e}{[\text{butène-1}]_e + [\text{cis butène-2}]_e + [\text{trans butène-2}]_e}$$

$$K(T) = \frac{[\text{isobutène}]}{[\text{butène-1}] + [\text{cis butène-2}] + [\text{trans butène-2}]}$$

où T est la température du butène à la sortie du réacteur, les autres valeurs représentant les concentrations en sortie de réacteur ([            ]) ou à l'équilibre ([            ]$_e$) pour la température T.

Le pouvoir isomérisant ou taux d'isomérisation A(T) est alors donné par la formule suivante :

$$A(T) = \frac{K(T)}{K_{th}(T)}$$

Le pouvoir isomérisant des oléfines de l'alumine stabilisée issue du procédé de l'invention est faible, et inférieur à celui des alumines stabilisées par de la silice (pour un même taux de Na$_2$O) par imprégnation selon l'art antérieur.

La teneur en silice de l'alumine stabilisée issue du procédé de l'invention est avantageusement comprise entre 1 et 20 %, de préférence entre 1,5 et 15 %, de manière encore plus préférée entre 2 et 11 % et, plus particulièrement, entre 4 et 8 % en poids.

L'alumine issue du procédé de l'invention présente, après calcination à 1200°C pendant 4 heures, une surface spécifique (mesurée par la méthode B.E.T.), supérieure à 50 m$^2$/g, de préférence comprise entre 55 et 85 m$^2$/g, et, de manière encore plus préférée, entre 60 et 80 m$^2$/g.

L'objet de l'invention réside ainsi dans un nouveau procédé de préparation d'une alumine stabilisée dans lequel une alumine de départ est soumise à une opération de mûrissement, puis à un traitement thermique, caractérisé en ce que l'alumine de départ est sous forme de poudre issue de la déshydratation rapide d'un hydroxyde ou d'un oxyhydroxyde d'aluminium à une température comprise entre 400 et 1200 °C et en ce que l'opération de mûrissement est effectuée par mise en suspension de ladite poudre d'alumine dans de l'eau à une température de 70 à 110°C en présence d'au moins un agent stabilisant constitué par un composé du silicium.

L'opération de mûrissement ou dite également de maturation consiste à réhydrater la poudre d'alumine mise en oeuvre, la phase cristalline appelée boehmite se développant. Cette réhydratation est un processus de dissolution-reprécipitation. Elle s'effectue de préférence par mise en suspension de la poudre d'alumine dans de l'eau à une concentration habituellement comprise entre 50 et 600 g/l, par exemple entre 200 et 350 g/l.

Selon l'une des caractéristiques principales du procédé selon l'invention, cette réhydratation s'effectue en présence d'au moins un agent stabilisant constitué par un composé du silicium.

Comme composé du silicium, on peut employer tout précurseur de la silice. On peut ainsi utiliser un dérivé organique du silicium en solution (tel qu'un alcoxyde), un sol de silice (éventuellement stabilisé par Na$_2$O, dans un rapport pondéral SiO$_2$/Na$_2$O compris en général entre 25 et 150) dilué ou non. On peut également employer un silicate d'ammonium quaternaire en solution, notamment le silicate de tétraéthylammonium, le silicate de tétrapropylammonium, le silicate de tétrahydroxyéthylammonium (ou silicate de tétraéthanolammonium).

L'utilisation d'un sol de silice est préférée.

La quantité de composé du silicium ajoutée est telle qu'elle correspond à une quantité avantageusement comprise entre 1 et 20 %, de préférence entre 1,5 et 15 %, de manière encore plus préférée entre 2 et 11 % et, plus particulièrement, entre 4 et 8 % en poids de silice par rapport au poids total de l'alumine stabilisée finie.

Le pH de la suspension est, après introduction de l'agent stabilisant, ajusté à une valeur de préférence comprise entre 8 et 12, par exemple entre 9 et 11, par ajout d'une base quelconque, généralement une base faible, par exemple de l'ammoniaque.

L'opération de mûrissement s'effectue à une température avantageusement comprise entre 70 et 110°C, de préférence aux environs de 100°C (par exemple entre 95 et 100°C).

La durée du mûrissement est habituellement comprise entre 1 et 48 heures. Lorsque l'opération de mûrissement s'effectue à une température ne dépassant pas 100°C, sa durée est par exemple comprise entre 10 et 48 heures, de préférence entre 20 et 30 heures. Lorsqu'elle s'effectue à une température supérieure à 100°C, on emploie généralement un autoclave et la durée du mûrissement peut alors n'être comprise qu'entre 1 et 6 heures, de préférence entre 1 et 4 heures.

L'alumine obtenue est au moins en partie sous forme de boehmite (ou pseudo-boehmite) ; son taux de boehmite (ou pseudo-boehmite) est habituellement compris entre 5 et 35 % en poids, de préférence entre 10 et 30 % en poids.

Cette alumine est ensuite séparée par toute technique connue de séparation liquide/solide, par exemple par filtration.

L'opération de séparation liquide/solide peut comporter, si nécessaire, un traitement de purification permettant d'éliminer de manière efficace la soude (qui peut être présente dans la poudre d'alumine de départ) et/ou d'autres impuretés, notamment des impuretés provenant éventuellement de l'agent stabilisant mis en oeuvre.

Il est ainsi possible de préparer une alumine stabilisée ayant un degré de pureté élevé directement à partir de produits contenant des impuretés pour l'application envisagée, ce qui n'est généralement pas le cas des méthodes de stabilisation d'alumine de l'art antérieur.

Le traitement thermique est habituellement effectué à une température comprise entre 100 et 700°C, pendant une période de temps suffisante pour enlever l'eau non liée chimiquement à l'alumine, par exemple entre 2 et 32 heures.

Ce traitement thermique peut consister en un séchage, éventuellement suivi d'une calcination.

Le séchage est effectué à une température généralement comprise entre 100 et 250°C, de préférence entre 100 et 200°C, pendant une durée le plus souvent comprise entre 2 et 24 heures.

La calcination est mise en oeuvre à une température généralement comprise entre 250 et 700°C, de préférence entre 350 et 600°C, pendant une durée le plus souvent comprise entre 1 et 8 heures.

La poudre d'alumine de départ mise en oeuvre dans le procédé de l'invention est issue de la déshydratation rapide d'au moins un hydroxyde d'aluminium tel que la bayerite, l'hydrargillite ou gibbsite, la nordstrandite et/ou d'au moins un oxyhydroxyde d'aluminium tel que la boehmite et le diaspore.

Cette déshydratation est opérée, dans n'importe quel appareillage approprié, à l'aide d'un courant de gaz chauds permettant d'éliminer et entrainer très rapidement l'eau évaporée. La température d'entrée desdits gaz dans l'appareillage varie généralement de 400 à 1200°C environ, par exemple de 800 à 1200°C environ, avec un temps de contact entre l'hydroxyde (ou l'oxyhydroxyde) et lesdits gaz chauds habituellement de l'ordre d'une fraction de seconde à 4 ou 5 secondes.

L'alumine issue de cette déshydratation peut éventuellement subir un traitement pour éliminer au moins une partie des alcalins présents.

La surface spécifique, mesurée par la méthode B.E.T., de l'alumine issue de la déshydratation rapide d'hydroxyde(s) et/ou d'oxyhydroxyde(s) d'aluminium est généralement comprise entre environ 50 et 450 $m^2$/g, le diamètre des particules variant habituellement entre 0,1 et 300 µm, de préférence entre 1 et 120 µm.

Cette alumine présente le plus souvent un volume poreux de l'ordre de 0,10 à 0,50 $cm^3$/g, les pores ayant des dimensions généralement inférieures à 50 nm.

Selon un mode de réalisation particulier de l'invention, cette alumine de départ provient de la déshydratation rapide de l'hydrate de Bayer (hydrargillite) qui est un hydroxyde d'aluminium industriel facilement accessible et très bon marché. Une telle alumine est bien connue de l'homme du métier et est notamment décrite dans le brevet français FR-A-1108011.

Le procédé selon l'invention permet ainsi l'obtention d'une alumine telle que décrite précédemment ayant une excellente stabilité thermique, c'est-à-dire conservant une surface spécifique élevée à haute température : sa surface spécifique, après calcination à 1200°C pendant 4 heures, est avantageusement supérieure à 50 $m^2$/g, de préférence comprise entre 55 et 85 $m^2$/g et, de manière encore plus préférée, entre 60 et 80 $m^2$/g (mesurée par la méthode B.E.T.).

La silice ne se retrouve pas essentiellement répartie à la surface de l'alumine mais est essentiellement répartie dans la structure cristalline de l'alumine, contrairement à ce qu'on obtient lorsqu'on imprègne classiquement de l'alumine avec une solution d'un précurseur de silice.

L'alumine stabilisée obtenue selon le procédé de l'invention présente ainsi un point isoélectrique supérieur à 7, de préférence à 8 et un pouvoir isomérisant des oléfines faible. En particulier, son pouvoir isomérisant est généralement au moins deux fois inférieur, de préférence au moins trois fois inférieur, à celui d'une alumine imprégnée par une solution d'un précurseur de silice et ayant un taux de $Na_2O$ identique.

L'alumine stabilisée issu du procédé selon l'invention peut être employée comme support de catalyseur. Elle est notamment utilisée comme support de catalyseur pour le traitement des gaz d'échappement des moteurs à combustion interne : elle peut être mise en oeuvre soit sous forme de billes, soit sous forme d'une couche poreuse de revêtement ("washcoat") que l'on dépose sur un support monolithique en céramique ou en métal ; la phase active du catalyseur peut être constituée de métaux précieux ; on peut utiliser notamment la phase active décrite dans le brevet US-A-4 378 307.

Les exemples suivants illustrent l'invention sans toutefois en limiter la portée.

EXEMPLE 1 (comparatif)

On utilise comme matière première une poudre d'alumine, de surface spécifique d'environ 350 $m^2$/g, issue de la déshydratation rapide d'hydrargillite.

Cette poudre d'alumine est imprégnée à 5 % en poids de silice avec un sol de silice dilué, référencé LUDOX SM et commercialisé par la société DUPONT DE NEMOURS, puis séchée à 120°C pendant 12 heures.

L'alumine ainsi obtenue présente, après calcination à 1200°C pendant 4 heures, une surface spécifique de 21 $m^2$/g.

Le même résultat est obtenu en utilisant le sol de silice référencé CECASOL 2C commercialisé par la société CECA SA.

EXEMPLE 2 (conforme à l'invention)

On utilise la même matière première que dans l'exemple 1.

Cette poudre d'alumine est mûrie, c'est-à-dire réhydratée, par mise en suspension dans de l'eau à une concentration de 250 g/l pendant 24 heures à 98°C, un sol de silice (référencé LUDOX SM et commercialisé par la société DUPONT DE NEMOURS) ayant été ajouté en début d'opération en une quantité telle qu'elle correspond à une quantité de 2 % en poids de silice par rapport au poids total de l'alumine stabilisée finie. Le pH est ajusté à environ 10 par addition d'ammoniaque en début d'opération.

A l'issue du traitement, on effectue une séparation liquide/solide et on sèche alors l'alumine à 120°C pendant 12 heures.

L'alumine ainsi obtenue présente, après calcination à 1200°C pendant 4 heures, une surface spécifique de 60 $m^2/g$.

EXEMPLE 3 (conforme à l'invention)

On opère comme dans l'exemple 2, à cette différence près que la quantité de sol de silice ajouté est telle qu'elle correspond à une quantité de 5 % en poids de silice par rapport au poids total de l'alumine stabilisée finie.

L'alumine est ensuite calcinée à 500°C pendant 2 heures.

L'alumine ainsi obtenue présente un taux de $Na_2O$, exprimé par rapport au poids total de l'alumine stabilisée finie, de 150 ppm.

Elle possède un point isoélectrique de 8,5 et un pouvoir isomérisant (ou taux d'isomérisation) des oléfines A(T) de 5,4 % (à T=400°C).

Elle présente, après calcination à 1200°C pendant 4 heures, une surface spécifique de 78 $m^2/g$.

EXEMPLE 4 (conforme à l'invention)

On opère comme dans l'exemple 2, à cette différence près que la quantité de sol de silice ajouté est telle qu'elle correspond à une quantité de 10 % en poids de silice par rapport au poids total de l'alumine stabilisée finie.

L'alumine obtenue présente, après calcination à 1200°C pendant 4 heures, une surface spécifique de 70 $m^2/g$.

**Revendications**

1. Procédé de préparation d'une alumine stabilisée dans lequel une alumine de départ est soumise à une opération de mûrissement, puis à un traitement thermique, caractérisé en ce que l'alumine de départ est sous forme de poudre issue de la déshydratation rapide d'un hydroxyde ou d'un oxyhydroxyde d'aluminium à une température comprise entre 400 et 1200 °C et en ce que l'opération de mûrissement est effectuée par mise en suspension de ladite poudre d'alumine dans de l'eau à une température de 70 à 110°C en présence d'au moins un agent stabilisant constitué par un composé du silicium.

2. Procédé selon la revendication 1, caractérisé en ce que le composé du silicium est un précurseur de la silice.

3. Procédé selon la revendication 1, caractérisé en ce que le composé du silicium est un dérivé organique du silicium en solution.

4. Procédé selon la revendication 1, caractérisé en ce que le composé du silicium est un sol de silice.

5. Procédé selon l'une des revendications précédentes, caractérisé en ce que l'opération de mûrissement s'effectue à une température de 95 à 100°C.

6. Procédé selon l'une des revendications précédentes, caractérisé en ce que le pH de la suspension est, après introduction de l'agent stabilisant, ajusté à une valeur comprise entre 8 et 12.

7. Procédé selon l'une des revendications précédentes, caractérisé en ce que le traitement thermique est effectué à une température comprise entre 100 et 700°C.

8. Procédé selon la revendication 7, caractérisé en ce que ledit traitement consiste en un séchage à une température comprise entre 100 et 250°C.

9. Procédé selon la revendication 7, caractérisé en ce que ledit traitement consiste en un séchage à une température comprise entre 100 et 250°C, suivi d'une calcination effectuée à une température comprise entre 250 et 700°C.

10. Procédé selon l'une des revendications précédentes, caractérisé en ce que la poudre d'alumine de départ est issue de la déshydratation rapide d'hydrargillite.

11. Procédé selon l'une des revendications précédentes, caractérisé en ce que la poudre d'alumine de départ est préalablement soumise à un traitement pour éliminer au moins une partie des alcalins présents.

**Claims**

1. A process for the preparation of a stabilised alumina in which a starting alumina undergoes an ageing operation, followed by a heat treatment, characterised in that the starting alumina is in powder form as a result of the rapid dehydration of an aluminium hydroxide or oxyhydroxide at a temperature of between 400 and 1200°C and in that the ageing operation is carried out by placing said alumina powder in suspension in water at a temperature of between 70 and 110°C in the presence of at least one stabilising agent constituted by a compound of silicon.

2. A process according to claim 1, characterised in that the silicon compound is a precursor of silica.

3. A process according to claim 1, characterised in that the silicon compound is an organic derivative of silicon in solution.

4. A process according to claim 1, characterised in that the silicon compound is a silica sol.

5. A process according to one of the preceding claims, characterised in that the ageing operation takes place at a temperature of between 95 and 100°C.

6. A process according to one of the preceding claims, characterised in that the pH of the suspension, after introducing the stabilising agent, is adjusted to a value of between 8 and 12.

7. A process according to one of the preceding claims, characterised in that the heat treatment is performed at a temperature of between 100 and 700°C.

8. A process according to claim 7, characterised in that said treatment consists of drying at a temperature of between 100 and 250°C.

9. A process according to claim 7, characterised in that said treatment consists of drying at a temperature of between 100 and 250°C, followed by calcining at a temperature of between 250 and 700°C.

10. A process according to one of the preceding claims, characterised in that the starting alumina powder results from the rapid dehydration of hydrargillite.

11. A process according to one of the preceding claims, characterised in that the starting alumina powder undergoes a treatment beforehand to at least partly eliminate the alkalis present.

**Patentansprüche**

1. Verfahren zur Herstellung eines stabilisierten Aluminiumoxids, bei dem man von einem Aluminiumoxid ausgeht, das einer Reifungsoperation und anschließend einer thermischen Behandlung unterzogen wird, dadurch gekennzeichnet, daß das Ausgangs-Aluminiumoxid in einer Pulverform vorliegt, die aus der schnellen Dehydratisierung eines Hydroxids oder eines Oxyhydroxid von Aluminium bei einer Temperatur zwischen 400 °C und 1200 °C stammt, und dadurch, daß die Reifungsoperation mittels Suspendieren des genannten Aluminiumoxid-Pulvers in Wasser bei einer Temperatur von 70 °C bis 110 °C in Anwesenheit von mindestens einem Stabilisierungsmittel durchgeführt wird, das aus einer Siliciumverbindung besteht.

2. Verfahren nach Anspruch 1, dadurch gekennzeichnet, daß die Siliciumverbindung ein Vorläufer von Siliciumdioxid ist.

3. Verfahren nach Anspruch 1, dadurch gekennzeichnet, daß die Siliciumverbindung ein organisches Derivat von Silicium in Lösung ist.

4. Verfahren nach Anspruch 1, dadurch gekennzeichnet, daß die Siliciumverbindung ein Sol von Siliciumdioxid ist.

5. Verfahren nach irgendeinem der vorstehenden Ansprüche, dadurch gekennzeichnet, daß die Reifungsoperation bei einer Temperatur von 95 °C bis 100 °C erfolgt.

6. Verfahren nach irgendeinem der vorstehenden Ansprüche, dadurch gekennzeichnet, daß der pH-Wert der Suspension nach dem Eintragen des Stabilisierungsmittels auf einen Wert zwischen 8 und 12 eingestellt wird.

7. Verfahren nach irgendeinem der vorstehenden Ansprüche, dadurch gekennzeichnet, daß die thermische Behandlung bei einer Temperatur zwischen 100 °C und 700 °C durchgeführt wird.

8. Verfahren nach Anspruch 7, dadurch gekennzeichnet, daß die genannte Behandlung in einer Trocknung bei einer Temperatur zwischen 100 °C und 250 °C besteht.

9. Verfahren nach Anspruch 7, dadurch gekennzeichnet, daß die genannte Behandlung in einer Trocknung bei einer Temperatur zwischen 100 °C und 250 °C, gefolgt von einer Kalzinierung bei einer Temperatur zwischen 250 °C und 700 °C besteht.

10. Verfahren nach irgendeinem der vorstehenden Ansprüche, dadurch gekennzeichnet, daß das eingesetzte Aluminiumoxid-Pulver aus der schnellen Dehydratisierung von Hydrargillit stammt.

11. Verfahren nach irgendeinem der vorstehenden Ansprüche, dadurch gekennzeichnet, daß das eingesetzte Aluminiumoxid-Pulver zuvor einer Behandlung unterzogen wird, um mindestens einen Teil der anwesenden Alkalien zu entfernen.